# EUROPEAN PATENT SPECIFICATION

(11) **EP 1 935 671 B1**
(45) Date of publication and mention of the grant of the patent: **25.05.2011**
(21) Application number: 07123543.6
(22) Date of filing: 19.12.2007
(51) Int. Cl.: B60C 11/03

(54) **Pneumatic tire**
Luftreifen
Pneu

(30) Priority: 21.12.2006 US 643150
(43) Date of publication of application: 25.06.2008
(73) Proprietor: The Goodyear Tire & Rubber Company, Akron, OH 44316-0001 (US)
(72) Inventor: Cambron, Anne-France Gabrielle Jeanne-Marie, L-7562 Mersch (LU); Nguyen, Gia Van, F-08110 Blagny (FR); Houba, Raymond Marie Joseph Ghislain, B-6640 Vaux-sur-Sure (BE); Severens, Frank, B-6700 Frassem-Arlon (BE)
(74) Representative: Kutsch, Bernd

(56) References cited:
- EP-A- 0 503 406
- EP-A- 1 616 719
- EP-A- 1 676 695
- FR-A- 2 763 892

## Description

### Field of the Invention

The present invention relates to a pneumatic tire, and more particularly to a tread of a pneumatic tire wherein the tread is configured to provide a different tread pattern as the tire is worn.

### Background of the Invention

Tire tread patterns are provided with numerous elements such as ribs and blocks, the elements being separated by circumferential and/or transverse grooves. The grooves provide means for water evacuation and form the biting edges of the tread elements.

When a tire is new, the tread has a maximum tread height. This initial height may vary depending upon the intended use of the tire; a winter tire has an increased tread depth in comparison to an all season tire. Regardless of the initial tread depth, when the tire is new, the tread elements have an initial stiffness. The actual stiffness of the tread elements is dictated by the block size, shape, and the presence of any siping. As the tread is worn, the block height decreases while the tread element stiffness increases.

When a tire travels through water, two mechanisms occur: water force-back and water flow through the grooves. The water force back mechanism is always present. However, for a smooth tire, above a particular vehicle speed and water depth, a water bank is formed in front of the footprint leading edge. Slippage between the tire and the road surface will occur unless the water bank is reduced by water flow through the grooves, carrying the water through the footprint. In a new tire, there may be a compromise in the tread pattern between stiffness and wet driving performance. In such a new tire, the water force back mechanism and the non-skid tread depth is sufficient to provide for acceptable aquaplaning resistance. As the tire wears and the non-skid depth reduces, the water flow through the grooves is reduced. The present invention is directed to a tire having a tread that compensates for this reduced flow.

FR-A- 2 763 892 and E-P-A-1 616 719 disclose tires having the technical features of the preamble of claim 1.

### Summary of the Invention

The invention relates to a pneumatic tire according to claim 1. Dependent claims refer to preferred embodiments of the invention.

The tire is designed to have a variable tread pattern, the tread pattern changing with wear, to achieve similar tread performance for the tire when both new and worn. The changing pattern optimizes the worn tire performance in an attempt to maintain the tire's wet performance characteristics.

### Definitions

The following definitions are controlling for the disclosed invention.

"Axial" and "axially" are used herein to refer to lines or directions that are parallel to the axis of rotation of the tire.

"Circumferential" means lines or directions extending along the perimeter of the surface of the annular tire parallel to the Equatorial Plane (EP) and perpendicular to the axial direction.

"Groove" means an elongated void area in a tread that may extend circumferentially or laterally about the tread in a straight, curved, or zigzag manner. Circumferentially and laterally extending grooves sometimes have common portions and may be sub classified as "wide" or "narrow." A "narrow groove" has a width in the range from 0.8% to 3% of the compensated tread width and a "wide groove" has a width greater than 3% thereof. The "groove width" is equal to tread surface area occupied by a groove or groove portion, the width of which is in question, divided by the length of such groove or groove portion; thus, the groove width is its average width over its length. Grooves reduce the stiffness of tread regions in which they are located. Grooves may be of varying depths in a tire. The depth of a groove may vary around the circumference of the tread, or the depth of one groove may be constant but vary from the depth of another groove in the tire.

"Inner" means toward the inside of the tire and "outer" means toward its exterior.

"Lateral" means an axial direction.

"Nonskid" means the depth of grooves in a tire tread as measured from the surface of a worn or unworn tire respectively to the radially innermost surface of a groove in the worn or unworn tread respectively.

"Worn" tread means a tire having a non-skid tread depth being less than the non-skid tread depth of an unworn tire.

"Radial" and "radially" are used to mean directions radially toward or away from the axis of rotation of the tire.

"Sipe" means a void area in a tread that may extend circumferentially or laterally in the tread in a straight, curved, or zigzag manner. A sipe typically is formed by steel blades inserted into a cast or machined mold or tread ring therefore. In the appended drawings, excluding close up drawings, sipes are illustrated by single lines because they are so narrow. A "sipe" is a groove having a width in the range from 0.2% to 0.8% of the compensated tread width.

### Brief Description of the Drawings

The invention will be described by way of example and with reference to the accompanying drawings in which:
FIG. 1 is a perspective view of an unworn tire;
FIG. 1A is an enlarged view of section 1 A from FIG. 1;
FIG. 2 is a perspective view of a tire following wear of the tire tread;
FIG. 2A is an enlarged view of section 2A from FIG. 2;
FIG. 3 is a flat view of the tread of FIG. 1;
FIG. 4 is a flat view of the tread of FIG. 2;
FIG. 5 is a cross-sectional view along line 5-5 of FIG. 3;
FIG. 6 is a cross-sectional view along line 6-6 of FIG. 4;
FIG. 7 is a perspective view of one design pitch of the unworn tread of FIG. 1;
FIG. 8 is an unworn tire tread illustrating another embodiment; and
FIG. 9 is a flat view of the tread of FIG. 8 following wear of the tread.

### Detailed Description of the Invention

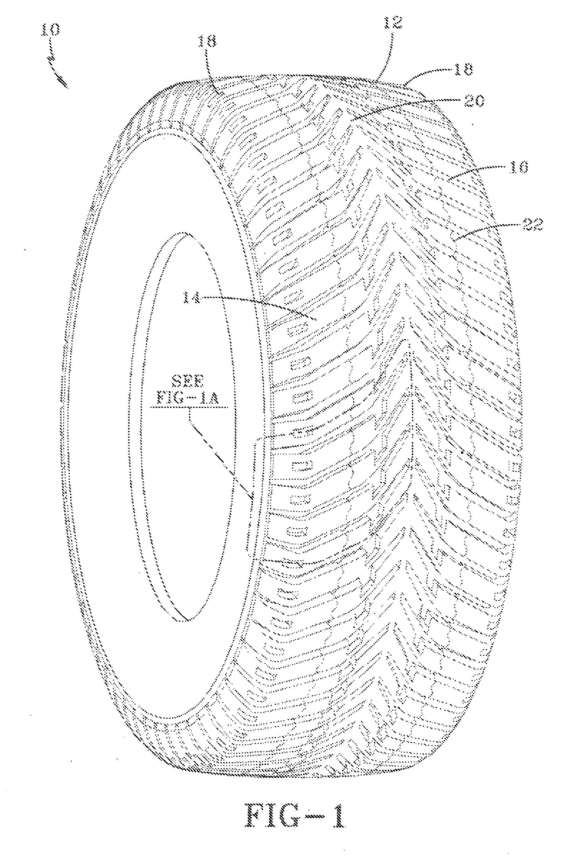

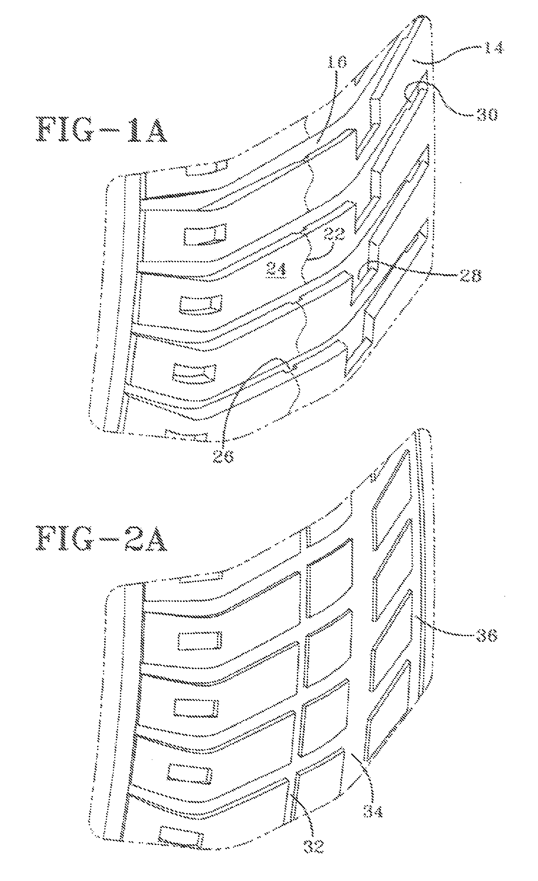

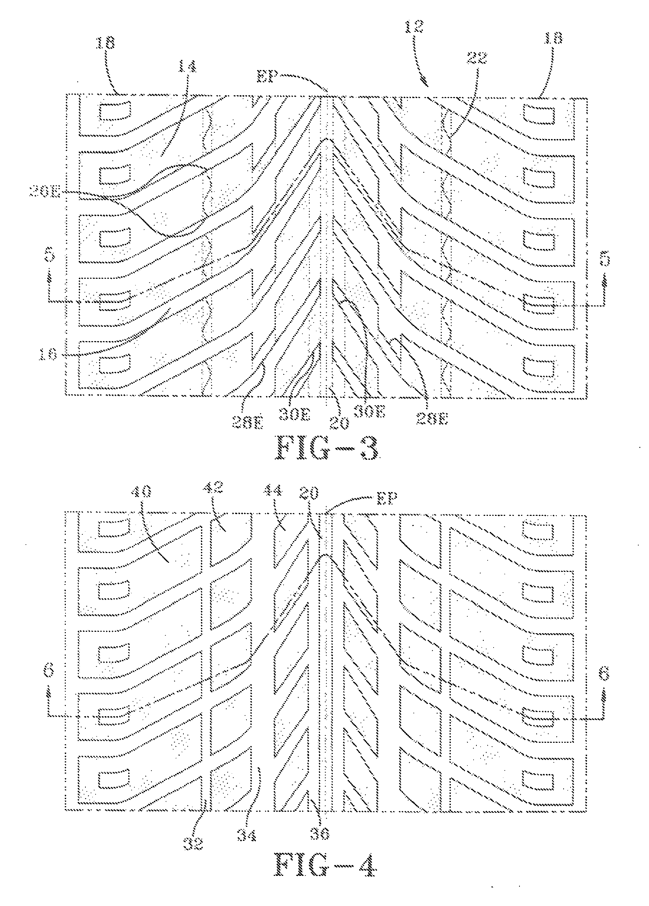

An unworn tire is illustrated in FIG. 1. The tire 10 has a tread 12 comprising a plurality of tread elements 14 separated by inclined lateral grooves 16. The tread elements 14 extend continuously between the tread shoulders 18. Circumferentially adjacent tread elements 14 are connected in the region of the tire equatorial plane EP, creating a quasi rib 20 in the tread, see also FIG. 3. The tread 14 is also provided with sipes 22 that extend between the circumferentially adjacent lateral grooves 16.

Radially inward of the tread surface 24 are a plurality of groove voids. In the tread of FIG. 1, in each design pitch, extending between a tread shoulder edge and the equatorial plane, radially inward of the tread surface 24 of each tread element are three groove voids 26, 28, 30, see FIGS. 1A, 5, and 7. The groove voids preferably have a primary axis of orientation along the circumferential length of the tire. This axis of orientation is preferably inclined at an angle of 0° to 35 °, such as 0° or 10° to 20 °, relative to the equatorial plane (EP) of the tire. The groove voids 26, 28, 30 also have opposing circumferential ends 26E, 28E, 30E, that one preferably coincident with the lateral grooves 16. Groove voids 26 have a construct of a type that may be identified as a sipe-groove, wherein, at the tread surface, there is a sipe and at a defined depth of the tread, the sipe transforms to a groove void. As the respective groove voids 26, 28, 30 in circumferentially adjacent tread elements 14 are circumferentially aligned, the groove voids 26, 28, 30 create multiple tunnel-like features in the tread 12.

However, as there is tread rubber located above each groove void, when the tread is unworn or has been subjected to a limited amount of tread wear, an obstruction is created in what may be considered a water flow channel. Due to the absence of continuous unobstructed circumferential grooves, the main water flow mechanism that occurs in the tread of FIG. 1 is water force back.

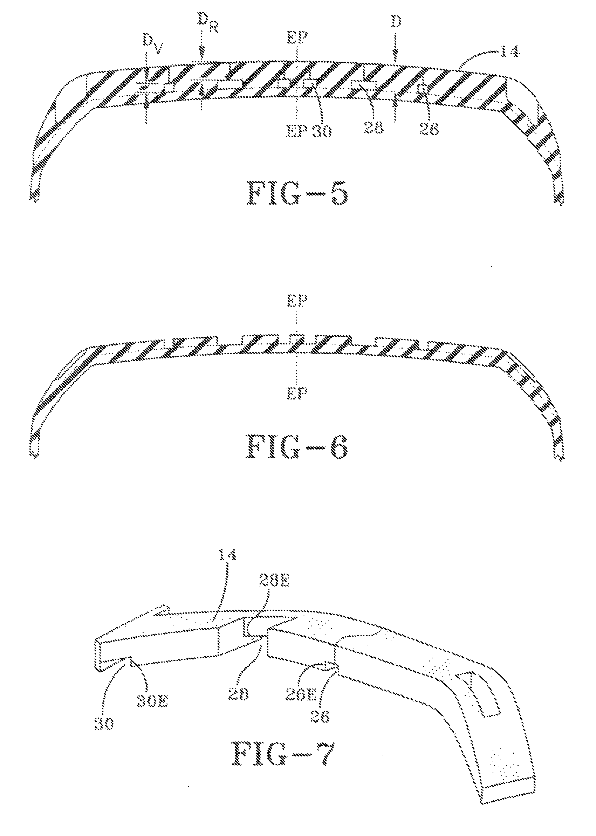

The tread 14 has an initial non-skid tread depth D calculated between the tread surface of the tire when unworn, and the radially innermost base of a groove in the tread, see FIG. 5. The tread, when unworn, also has a net-to-gross ratio. The net-to-gross ratio is the ratio of the total surface area of the normally loaded and normally inflated tire tread that will contact with a hard flat surface such as the ground, divided by the total area of the tread, including noncontacting portions such as grooves, as measured around the entire circumference of the tire, i.e. the ratio of contact area to total tread area. For the illustrated embodiments, the treads have a net-to-gross ratio greater than 60%, more specifically, the net-to-gross ratios for the illustrated treads are in the range of 60 to 80%, with the net-to-gross ratio of the tire of FIG. 1 in the range of 60 to 70%, or alternatively in the range of 60% to 65%.

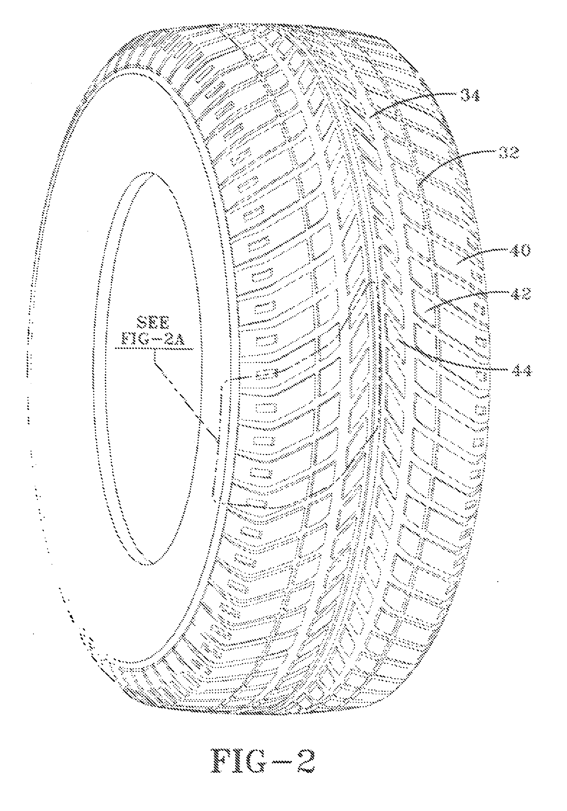

As the tread 14 wears, the non-skid tread depth D is reduced, and the groove voids 26, 28, 30 are exposed, creating new unobstructed circumferential grooves 32, 34, 36 in the tread, see FIGS. 2, 4, and 6; hence the term "groove void." A groove void is a the tread feature that is an void to the initial tread surface that generates a groove when exposed; thus the groove void has a width in the range of groove widths as defined above. Exposure of the groove voids is based upon the radial depth DR of the rubber above the groove voids. The rubber radial depth DR is preferably 30% to 70% of the full nonskid D; thus the grooves are preferably exposed anywhere from 30 to 70% wear of the full tread depth D. The groove voids 26, 28, 30 ideally also have a radially innermost base aligned at the same tread radial depth as the grooves 16.

The circumferential grooves 32, 34, 36 transform the tread of FIG. 1 from one of connected tread elements 14 to a tread having a plurality of non-connected tread blocks 40, 42, 44 located on each side of a center rib 20.

As seen in FIG. 5, the portions of tread rubber radially outward of each groove void preferably all have the same rubber radial depth; i.e. all of the groove voids 26, 28, 30 have the same groove void depth DV. For groove voids 26, that have a sipe component located radially outward thereof, connecting it to the tread surface, the void depth DV, is measured for only that portion of the void which has a width within the definition of a groove width; this is best illustrated in FIG. 5. However, to gradually increase the amount of unobstructed circumferential grooving in the tread, the groove void depths DV may vary. The variation may be selected based upon the axial position of the groove in the tread or the total cross-sectional area of the groove void. For example, if based upon the axial position of the to-be-created groove, it may be desired to have the axially outermost grooves 32 appear before the grooves 36 located nearest the equatorial plane. For such a tread variation, the groove void depth DV of the axially outermost groove void 26 is greater than the groove void depth of the axially inner groove void 30. If it is desired that the groove voids have a constant cross sectional area, the axially wider groove voids would have a reduced groove void depth DV in comparison to the other groove voids. Alternatively, the groove voids may be placed such that the radial depth D_{R} of the rubber above the groove voids 26, 28, 30 is constant, while the groove void depths Dᵥ are varied. Such a tread results in varying depths to the exposed grooves, creating more cross-sectional area through which the water may flow.

As the new grooves 32, 34, 36 are continuous, as the tire travels through water, water is free to flow unobstructed from the leading edge of the footprint to the trailing edge of the footprint. To improve water flow in the worn tire tread, it is one aspect of the invention that the newly created grooves fully extend between the leading and trailing footprint edges, contacting, and preferably extending beyond, the leading and trailing edges of the tire footprint.

Following the creation of the unobstructed grooves 32, 34, 36, the illustrated tread has a net-to-gross ratio of less than 60%; the worn tread net-to-gross ratio is in the range of less than 60% to 45%. Alternatively expressed, with the creation of the new grooves in the tread, the net-to-gross ratio decreases by at least 10%, in the range of 10 to 30%; alternatively, the decrease in the net-to-gross ratio is in the range of 10 to 20% or 10 to 15%. For the remaining effective life of the tread, the net-to-gross ratio remains less than the original net-to-gross ratio of the tire tread - the cross-sectional area of grooves in the tread does not decrease.

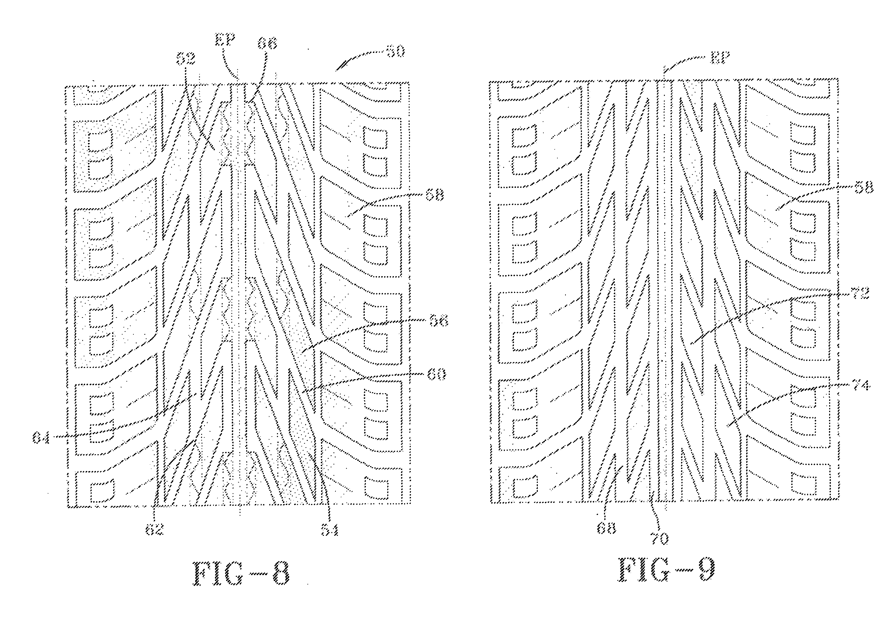

An alternative embodiment of the tire tread is shown in FIGS. 8 and 9. The tread 50 of FIG. 8 is that of an unworn tread. The tread has a combination of connected circumferentially adjacent tread elements 52 creating a rib-like feature at the tire equatorial plane EP. On each lateral side of the central rib-like tread feature is a row of alternating width tread blocks 54, 56. Axially outward of this row of tread blocks is a shoulder row of tread blocks 58. The alternating width tread blocks 54, 56 and shoulder tread blocks 58 are separated by inclined lateral grooves 60. Separating the two rows of blocks is a continuous, non-obstructed circumferential groove.

In the row of alternating width blocks, the greater width blocks 56 are provided with a groove void 62. The groove void 62 is aligned with a short length circumferential groove 64. In the central rib-like feature, groove voids 66 are provided on each side of the equatorial plane EP. As the tread wears, continuous unobstructed circumferential grooves 68, 70 are generated as the rubber above the groove voids 62, 66 is worn away. This results in two rows 72, 74 of individual blocks between a center rib and the shoulder blocks 58. A tread of lower net-to-gross with an increased number of continuous unobstructed circumferential grooves is generated.

## Claims

1. A pneumatic tire, the tire having an equatorial plane (EP) and a tread (12), the tread (12) comprising grooves (16) therein and having a radially outer surface and an unworn non-skid tread depth (D) as measured from the radially outer surface of the unworn tread (12) and a radially innermost surface of the grooves (16), **characterised in that**, when the tread is unworn, the tread has a net-to-gross ratio in the range of 62-68%, after the tread (12) is worn to a worn non-skid tread depth, as measured from the radially outer surface of the worn tread (12) and a radially innermost surface of the grooves (16), said worn non-skid tread depth being in a range of from 20% to 80% of the unworn non-skid tread depth, the tread (12) has a net-to-gross ratio in a range of from 50% to 55%, and the tread (12) has two or three additional unobstructed circumferential grooves (32, 34, 36, 68, 70) on each side of the equatorial plane (EP) when the tread (12) is worn to said worn non-skid depth compared to the unworn tread.

2. The tire of claim 1 wherein the worn non-skid depth is 30% to 70% of the unworn non-skid depth (D).

3. The tire of claim 1 wherein the worn non-skid depth is 35 to 60% of the unworn non-skid depth (D).

4. The tire of claim 1 wherein the tread (12) has two additional unobstructed circumferential grooves (32, 34, 36, 68, 70) on each side of the equatorial plane (EP) when the tread (12) is worn to said worn non-skid depth compared to the unworn tread.

5. The tire of claim 1 wherein the tread (12) has three additional unobstructed circumferential grooves (32, 34, 36, 68, 70) on each side of the equatorial plane (EP) when the tread (12) is worn to said worn non-skid depth compared to the unworn tread.

## Patentansprüche

1. Luftreifen, wobei der Reifen eine Äquatorebene (EP) und eine Lauffläche (12) aufweist, wobei die Lauffläche (12) Rillen (16) darin umfasst und eine radial äußere Oberfläche und eine nicht abgenutzte Profiltiefe (D), gemessen ab der radial äußeren Oberfläche der nicht abgenutzten Laufläche (12) und einer radial innersten Oberfläche der Rillen (16), aufweist, **dadurch gekennzeichnet, dass**, wenn die Lauffläche nicht abgenutzt ist, die Lauffläche ein Netto-zu-Brutto-Verhältnis im Bereich von 62-68% aufweist, dass, nachdem die Lauffläche (12) auf eine abgenutzte Profiltiefe abgenutzt ist, gemessen ab der radial äußeren Oberfläche der abgenutzten Lauffläche (12) und einer radial innersten Oberfläche der Rillen (16), wobei die abgenutzte Profiltiefe in einem Bereich von 20% bis 80% der nicht abgenutzten Profiltiefe liegt, die Lauffläche (12) ein Netto-zu-Brutto-Verhältnis in einem Bereich von 50% bis 55% aufweist, und dass die Lauffläche (12) zwei oder drei zusätzliche freiliegende Umfangsrillen (32, 34, 36, 68, 70) auf jeder Seite der Äquatorebene (EP) aufweist, wenn die Lauffläche (12) auf besagte abgenutzte Profiltiefe abgenutzt ist, verglichen mit der nicht abgenutzten Lauffläche.

2. Reifen nach Anspruch 1, wobei die abgenutzte Profiltiefe 30% bis 70% der nicht abgenutzten Profiltiefe (D) beträgt.

3. Reifen nach Anspruch 1, wobei die abgenutzte Profiltiefe 35% bis 60% der nicht abgenutzten Profiltiefe (D) beträgt.

4. Reifen nach Anspruch 1, wobei die Lauffläche (12) zwei zusätzliche freiliegende Umfangsrillen (32, 34, 36, 68, 70) auf jeder Seite der Äquatorebene (EP) aufweist, wenn die Lauffläche (12) auf besagte abgenutzte Profiltiefe abgenutzt ist, verglichen mit der nicht abgenutzten Lauffläche.

5. Reifen nach Anspruch 1, wobei die Lauffläche (12) drei zusätzliche freiliegende Umfangsrillen (32, 34, 36, 68, 70) auf jeder Seite der Äquatorebene (EP) aufweist, wenn die Lauffläche (12) auf besagte abgenutzte Profiltiefe abgenutzt ist, verglichen mit der nicht abgenutzten Lauffläche.

## Revendications

1. Bandage pneumatique possédant un plan équatorial (EP) et une bande de roulement (12), des rainures (16) étant pratiquées dans la bande de roulement (12) qui possède une surface externe en direction radiale et une profondeur de sculpture de bande de roulement encore à l'état intact (D), telle qu'on la mesure à partir de la surface externe en direction radiale de la bande de roulement encore à l'état intact jusqu'à la surface la plus interne des rainures (16) en direction radiale, **caractérisé en ce que**, lorsque la bande de roulement est encore à l'état intact, la bande de roulement possède un rapport net-brut dans la plage de 62 à 68 %, après usure de la bande de roulement (12) jusqu'à concurrence d'une profondeur de sculpture de bande de roulement usée, telle qu'on la mesure à partir de la surface externe en direction radiale de la bande de roulement usée jusqu'à la surface la plus interne des rainures (16) en direction radiale, ladite profondeur de sculpture de bande de roulement à l'état usé se situant dans la plage de 20 % à 80 % de la profondeur de sculpture de bande de roulement à l'état encore intact, la bande de roulement (12) possède un rapport net brut dans la plage de 50 % à 55 %, et la bande de roulement (12) possède deux ou trois rainures circonférentielles supplémentaires libres (32, 34, 36, 68, 70) de chaque côté du plan équatorial (EP) lorsque la bande de roulement (12) est usée jusqu'à ladite profondeur de sculpture à l'état usé par rapport à la bande de roulement encore intacte.

2. Bandage pneumatique selon la revendication 1, dans lequel la profondeur de sculpture à l'état usé représente de 30 % à 70 % de la profondeur de sculpture encore intacte (D).

3. Bandage pneumatique selon la revendication 1, dans lequel la profondeur de sculpture à l'état usé représente de 35 % à 60 % de la profondeur de sculpture encore intacte (D).

4. Bandage pneumatique selon la revendication 1, dans lequel la bande de roulement (12) possède deux rainures circonférentielles supplémentaires libres (32, 34, 36, 68, 70) de chaque côté du plan équatorial (EP) lorsque la bande de roulement (12) est usée jusqu'à ladite profondeur de sculpture à l'état usé par rapport à la bande de roulement encore intacte.

5. Bandage pneumatique selon la revendication 1, dans lequel la bande de roulement (12) possède trois rainures circonférentielles supplémentaires libres (32, 34, 36, 68, 70) de chaque côté du plan équatorial (EP) lorsque la bande de roulement (12) est usée jusqu'à ladite profondeur de sculpture à l'état usé par rapport à la bande de roulement encore intacte.
